# FASCICULE DE BREVET EUROPEEN

(11) **EP 1 924 915 B1**
(45) Date de publication et mention de la délivrance du brevet: **24.05.2017**
(21) Numéro de dépôt: 06793200.4
(22) Date de dépôt: 04.09.2006
(51) Int. Cl.: G06F 11/07

(54) **PROCEDE DE CONTROLE DU BON FONCTIONNEMENT D'UN CALCULATEUR**
VERFAHREN ZUR ÜBERACHUNG DES RICHTIGEN BETRIEBSZUSTANDES EINES COMPUTERS
METHOD FOR MONITORING THE PROPER OPERATING CONDITION OF A COMPUTER

(30) Priorité: 16.09.2005 FR 0509496
(43) Date de publication de la demande: 28.05.2008
(73) Titulaire: THALES, 92400 Courbevoie (FR)
(72) Inventeur: ROUSSEL, Pierre, F-31400 Toulouse (FR)
(74) Mandataire: Esselin, Sophie
(86) Numéro de dépôt international: PCT/EP2006/065982
(87) Numéro de publication internationale: WO 2007/031426

(56) Documents cités:
- FR-A- 2 682 202
- FR-A- 2 770 917

## Description

La présente invention est relative aux calculateurs exécutant en temps partagé, sous le contrôle de leurs systèmes d'exploitation, plusieurs applications distinctes et indépendantes, partitionnées en tâches. Elle concerne notamment, les réseaux de calculateurs embarqués de type IMA tiré de l'expression anglo-saxonne : "Integrated Modular Avionics" qui sont composés de calculateurs interchangeables, assemblés en réseau, exécutant des programmes applicatifs écrits indépendamment des caractéristiques matérielles des calculateurs et ne résidant pas de façon permanente dans les calculateurs.

Le pilotage d'un aéronef nécessite l'exécution d'un certain nombre d'opérations de commande d'actionneurs et d'affichage déduites de modélisations mathématiques des comportements de l'aéronef et de certains de ses sous-ensembles qui sont mises en oeuvre par des calculateurs et qui tiennent compte des valeurs courantes des paramètres de vol et des consignes de l'équipage.

Au début, les calculateurs embarqués à bord d'un aéronef avaient chacun une configuration spécifique adaptée à une modélisation convenant à un type particulier d'opérations : fonctions de pilotage, fonctions de gestion du vol, fonctions de gestions des alarmes, etc.. Cette architecture s'est rapidement révélée pénalisante pour la maintenance car elle nécessite la gestion d'un parc important de calculateurs de rechange spécialisés et non interchangeables entre eux.

Pour faciliter la maintenance, on cherche à regrouper les calculateurs embarqués au sein d'une même armoire technique, à adopter une même architecture pour la majorité d'entre eux et à ne les spécialiser qu'au niveau de leurs entrées-sorties rendues interchangeables et de leur programmation, c'est-à-dire des calculs où applications qu'ils exécutent. Cela conduit à la notion de réseau de calculateurs IMA.

Les erreurs d'exécution d'une tâche au sein d'une application et leurs propagations aux autres applications exécutées concurremment pouvant avoir des conséquences particulièrement néfastes dans le cadre du pilotage d'un aéronef, des mesures d'insensibilisation à leur encontre doivent être prises dans le cadre d'un réseau de calculateurs IMA. Ces mesures d'insensibilisation consistent à pourvoir les différentes applications de tâches de surveillance de bonne exécution et à faire tourner une même application sur plusieurs calculateurs identiques fonctionnant de façon indépendante, l'un d'entre eux ayant la main et le ou les autres calculateurs faisant tourner en miroir la même application prenant la main en cas de détection d'une mauvaise exécution de l'application par le calculateur en prise.

La tâche de surveillance de bonne exécution d'une application consiste habituellement à poser périodiquement des questions à réponses convenues à l'application surveillée et à vérifier l'exactitude des réponses fournies.

Cette méthode a l'inconvénient d'aller à l'encontre de la portabilité des applications car elle demande de tenir compte, à la conception d'une application, de l'architecture du calculateur devant l'exécuter. En effet la recherche des réponses convenues aux questions posées par la tâche de surveillance doit faire participer le plus d'éléments possibles du calculateur pour que la surveillance soit efficace.

A titre d'illustration de l'état de la technique, le brevet FR 2682202 A divulgue un procédé de contrôle du bon fonctionnement d'un calculateur comportant un coeur numérique.

La présente invention a pour but une surveillance du bon fonctionnement d'un calculateur au niveau de son système d'exploitation, afin de sauvegarder la portabilité des applications qu'il exécute.

Elle a pour objet un procédé de contrôle du bon fonctionnement d'un calculateur comportant un coeur numérique exécutant en temps partagé plusieurs programmes applicatifs distincts et indépendants partitionnés en tâches sous le contrôle d'un système d'exploitation allouant des partitions mémoire, des fenêtres temporelles d'exécution de programmes applicatifs et des sous-fenêtres temporelles d'exécution de tâches organisées en trames. Ce procédé est remarquable en ce qu'il consiste à :
- associer au calculateur un automate câblé de surveillance à fonctionnement indépendant du coeur numérique du calculateur,
- lors de l'initialisation du système d'exploitation du calculateur, faire transmettre par le coeur numérique du calculateur à l'automate de surveillance, une définition des trames des fenêtres et sous-fenêtres temporelles et des allocations de partitions mémoire,

- faire signaler par le coeur numérique du calculateur à l'automate de surveillance, chaque changement de fenêtre temporelle,
- faire communiquer par le coeur numérique du calculateur à l'automate de surveillance, à chaque changement d'allocation de partitions mémoire, l'identité de la partition mémoire quittée, les heures de début et de fin d'allocation de la partition mémoire quittée et le numéro d'ordre, au sein d'une fenêtre temporelle, de la sous-fenêtre temporelle d'occurrence de l'allocation de la partition mémoire quittée,
- à partir des signalements de changement d'allocation de partitions mémoire délivrés par le coeur numérique du calculateur, faire surveiller par l'automate de surveillance, le respect par le calculateur, de la trame des fenêtres temporelles d'exécution de programmes applicatifs et des sous-fenêtres temporelles d'exécution de tâches, et des allocations de partitions mémoire qu'il a fourni à l'initialisation de son système d'exploitation, et
- faire émettre par l'automate de surveillance, une alarme de dysfonctionnement à chaque incohérence détectée entre les signalements du coeur numérique du calculateur et les définitions de la trame des fenêtres et sous-fenêtres d'exécution de programmes applicatifs et de tâches, et des allocations de partitions mémoire reçues à l'initialisation du système d'exploitation du calculateur.

Avantageusement, le coeur numérique du calculateur et l'automate de surveillance qui lui est associé sont pourvus d'horloges indépendantes.

Avantageusement, à chaque changement de fenêtre temporelle d'exécution de programme applicatif, l'automate de surveillance teste la dérive de son horloge par rapport à celle du coeur numérique du calculateur, resynchronise son horloge sur celle du calculateur(40) si la dérive reste dans une fenêtre de tolérance arbitraire et émet une alarme de dysfonctionnement dans le cas contraire.

Avantageusement, la fenêtre de tolérance arbitraire utilisée pour un test de dérive d'horloge a une largeur de l'ordre du dixième de la durée d'une fenêtre temporelle.

Avantageusement, il est prévu d'établir, pour les programmes applicatifs exécutés par le calculateur, un système d'abonnement facultatif à des applications programmables de service de surveillance exécutées par l'automate de surveillance.

Avantageusement, les applications programmables de service de surveillance exécutées par l'automate de surveillance sont paramétrées lors de l'initialisation du système d'exploitation du calculateur.

Avantageusement, les applications programmables de service de surveillance exécutées par un automate de surveillance opèrent leur surveillance au niveau de ports d'entrée-sortie du calculateur.

Avantageusement, les applications programmables de service de surveillance exécutées par l'automate de surveillance sont de type rendez-vous manqué.

Avantageusement, les applications programmables de service de surveillance exécutées par l'automate de surveillance sont de type chien de garde.

Avantageusement, les alarmes de dysfonctionnement émises sont utilisées pour réinitialiser le programme applicatif à l'origine de l'alarme.

Avantageusement, les alarmes de dysfonctionnement émises sont utilisées pour réinitialiser le système d'exploitation du calculateur.

Avantageusement, lorsque le coeur numérique du calculateur est pourvu d'un système d'interruptions non masquables, les alarmes de dysfonctionnement émises par l'automate de surveillance qui lui est associé, sont utilisées pour le réinitialiser, au bout d'un certain délai, par l'intermédiaire d'une interruption non masquable, le délai étant mis à profit pour enregistrer le contexte du dysfonctionnement.

Avantageusement, lorsque le calculateur est relié à un équipement de maintenance, les alarmes de dysfonctionnement émises par l'automate surveillance sont utilisées pour envoyer un compte-rendu de panne à l'équipement de maintenance.

Avantageusement, lorsque le calculateur fait partie d'un réseau de calculateurs équipés d'automates individuels de surveillance, les alarmes de dysfonctionnement émises par les automates individuels de surveillance des différents calculateurs sont utilisées pour envoyer aux autres calculateurs des sémaphores de dysfonctionnement mentionnant le ou les calculateurs concernés.

Avantageusement, un sémaphore de dysfonctionnement mentionne, en plus du calculateur concerné, le programme applicatif impliqué dans le dysfonctionnement.

Avantageusement, lorsque les programmes applicatifs sont exécutés en parallèle, de manière redondante, sur plusieurs calculateurs qui sont équipés individuellement d'automates de surveillance et dont un a pris la main, les autres fonctionnant en miroir en arrière plan, les alarmes de dysfonctionnement émises par les automates individuels de surveillance des différents calculateurs sont exploitées pour mettre en retrait, pour le programme applicatif concerné par une alarme, le calculateur à l'origine de cette alarme et pour le remplacer, s'il est en charge de ce programme applicatif, par un calculateur fonctionnant auparavant en miroir en arrière plan, qui prend alors la main pour le programme applicatif considéré.

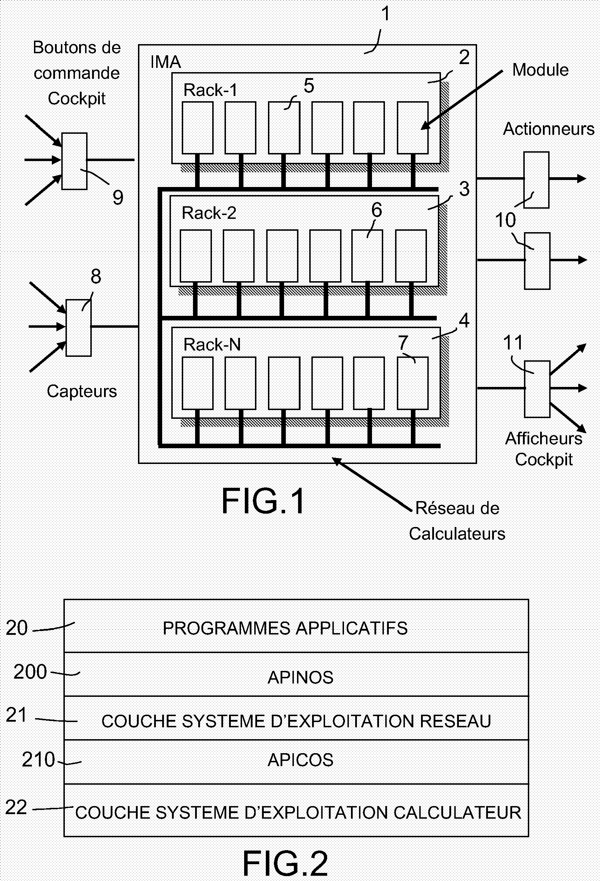

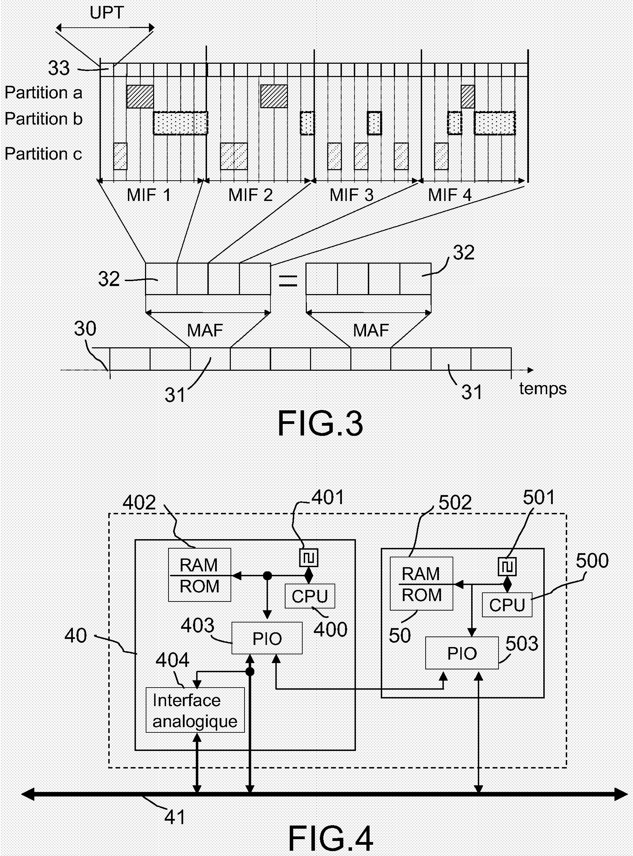

D'autres caractéristiques et avantages de l'invention ressortiront de la description ci-après d'un mode de réalisation donné à titre d'exemple. Cette description sera faite en regard du dessin dans lequel :
- une figure 1 est un schéma illustrant, de manière schématique, l'architecture d'un réseau de calculateurs IMA,
- une figure 2 illustre, de manière schématique, la structure en couche des logiciels régissant la marche d'une carte de calculateur ou module IMA,
- une figure 3 est un diagramme de temps montrant un exemple de trame d'allocation de partitions mémoire d'une carte de calculateur ou module IMA, et
- une figure 4 est un schéma d'une architecture de carte de calculateur mettant en oeuvre le procédé selon l'invention.

Comme montré à la figure 1, un réseau de calculateurs 1 de type IMA regroupe dans un ou plusieurs racks 2, 3, 4 des cartes de calculateur ou modules 5, 6, 7...à base de composants microprocesseurs, mémoire vive, mémoire morte, reliées par un réseau de communication commun, d'une part, à des entrées de signaux provenant de capteurs 8, (capteurs de pression normale et dynamique, capteurs inertiels, etc.) permettant de déterminer l'attitude de l'aéronef, les paramètres du mouvement de l'aéronef et sa localisation (radar, récepteurs de positionnement par satellites, etc..) ou de boutons de commande 9 du cockpit actionnés par l'équipage de l'aéronef et, d'autre part, à des sorties de signaux en direction d'actionneurs 10 ou d'afficheurs 11 du cockpit.

Les cartes de calculateurs ou modules sont des cartes standards d'un nombre limité de types fonction de leurs spécialisations : traitement de signaux analogiques, traitement de signaux numériques, traitements de signaux graphiques, etc.. Elles constituent des machines physiques associées à des machines virtuelles qui sont des ensembles cohérents de logiciels permettant de les utiliser.

Comme montré à la figure 2, une approche logicielle à plusieurs couches permet, dans un réseau de calculateurs IMA, de rendre la technologie transparente aux programmes applicatifs.

Les programmes applicatifs, qui constituent une première couche logicielle 20, sont mis en forme pour une assimilation par une deuxième couche logicielle 21 constituée par un système d'exploitation réseau par l'intermédiaire d'une première interface logicielle APINOS 200 ("Application Network Operating System" en anglo-saxon) assurant une suite de services nécessaires aux fonctionnalités du système d'exploitation réseau. Après leur assimilation par la deuxième couche logicielle 21 du système d'exploitation réseau, les programmes applicatifs sont une nouvelle fois mis en forme pour leur assimilation par une troisième couche logicielle 22 constituée par un système d'exploitation calculateur par l'intermédiaire d'une deuxième interface logicielle APICOS 210 ("Application Calculator Operating System" en anglo-saxon) assurant une suite de services nécessaires aux fonctionnalités du système d'exploitation calculateur.

La deuxième couche logicielle 21 du système d'exploitation réseau assurent la répartition des tâches entre les cartes de calculateur 5, 6, 7 du réseau et évite aux programmes applicatifs d'avoir à résider de manière permanente dans les mémoires des cartes de calculateur ou modules 5, 6, 7. A l'initialisation, elle répartit les exécutions des programmes applicatifs entre les différentes cartes de calculateur selon une planification prévue à l'avance et mémorisée, par exemple, dans une mémoire de masse puis veille au respect de la planification adoptée. Toutefois Cette couche peut se limiter dans des architectures simplifiées à gérer que les tâches sur un seul calculateur.

La troisième couche logicielle 22 d'un système d'exploitation calculateur interprète les programmes applicatifs 1 en fonction des particularités de la machine physique correspondant à la carte de calculateur concernée.

Plus généralement, ces couches logicielles permettent de gérer les ressources de la machine physique d'une carte de calculateur ou module en assurant le partage des ressources de la carte de calculateur ou module entre un ensemble plus ou moins grand d'utilisateurs constitués de programmes applicatifs. Il est constitué en général par un noyau assurant les fonctionnalités suivantes :
- gestion des tâches,
- gestion des fichiers,
- gestion des ports d'entrée/sortie,
- gestion de mémoire,
- gestion des tâches, interruptions, sémaphores, etc.
et par un ensemble d'outils système.

Grâce aux trois couches logicielles 20, 21, 22, les programmes applicatifs peuvent être écrits dans des langages de programmation faisant abstraction des particularités de l'architecture du réseau et des cartes de calculateur qu'il contient. Une première compilation par l'interface logicielle 200 les adapte au système d'exploitation du réseau qui est fonction de l'architecture du réseau et une deuxième compilation par l'interface logicielle 210 les adapte aux systèmes d'exploitation calculateur des cartes de calculateur ou modules auxquelles leur exécution a été assignée.

Au cours d'une phase d'initialisation, le système d'exploitation réseau définit, au niveau réseau, la répartition des exécutions des programmes applicatifs entre les différentes cartes de calculateur et, au niveau de chaque carte de calculateur, les ordonnancements temporels des tâches des programmes applicatifs et allocations de partitions mémoire.

Les systèmes d'exploitation réseau et calculateur permettent le multitâche et le multi utilisateur au niveau d'une carte de calculateur ou module du réseau IMA. Au niveau d'une carte de calculateur ou module, Ils comportent un gestionnaire de tâches ou allocateur qui, à l'initialisation du réseau, planifie un ordonnancement temporel des tâches et des allocations de partitions mémoire de la carte de calculateur considérée, et qui, au cours du fonctionnement, assure le respect par la carte de calculateur considérée, de l'ordonnancement temporel et des allocations de partitions mémoire qui ont été planifiés.

La figure 3 donne un exemple d'ordonnancement temporel et d'allocation de partitions mémoire fournis à une carte de calculateur. L'ordonnancement temporel respecte une trame 30 constituée d'une succession de plusieurs fenêtres temporelles MAF 31 subdivisées en une succession de sous-fenêtres temporelles MIF 32 elles-mêmes subdivisées en unités de partition temporelle UPT 33. Les fenêtres temporelles MAF 31 sont de même durée, de même que les sous-fenêtres temporelles MIF 32 tandis que les partitions temporelles UPT peuvent avoir des durées temporelles différentes.

Les fenêtres temporelles MAF 31 sont allouées à des programmes applicatifs exécutés en temps partagé, leurs sous-fenêtres temporelles MIF 32 à des tâches appelées par les programmes applicatifs allocataires de la fenêtre temporelle MAF 31 d'appartenance et les unité de partition temporelle UPT 33 à des processus appelés par les tâches allocataires de la sous-fenêtre temporelle MIF 32 d'appartenance.

Dans l'exemple représenté, chaque fenêtre temporelle MAF 31 renferme une sous-trame de quatre sous-fenêtres MIF 32 de même durée, donnant la possibilité d'exécuter en temps partagé, quatre tâches distinctes et chaque sous-fenêtre MIF 32 une succession de huit unités de partition temporelle UPT 33 de même durée donnant la possibilité d'exécuter en temps partagé, huit processus distincts. Le tableau d'allocation de partitions mémoire 4 rassemble trois partitions : la partition a représentée en grisé sombre, la partition b représentée en grisé clair et la partition c représentée en texture à chevrons, que se partagent les processus.

On cherche à sécuriser par redondance, les exécutions des programmes applicatifs intéressant des fonctions vitales d'un aéronef. Cette sécurisation consiste à faire exécuter un même programme applicatif en parallèle sur plusieurs cartes de calculateurs, en général deux de configurations différentes, une seule ayant la main sur les sorties, la ou les autres fonctionnant en miroir et à surveiller la bonne exécution du programme applicatif au niveau des cartes de calculateur, la détection d'une anomalie d'exécution entraînant la mise à l'écart de la carte de calculateur concernée qui, si elle à la main sur les sorties du réseau, la laisse au profit de l'une des cartes de calculateur fonctionnant en miroir.

D'une façon générale, la portabilité des programmes applicatifs dans une structure de réseaux de calculateurs de type IMA, interdit une surveillance directe l'exécution d'un programme applicatif par une carte de calculateur. Pour tourner cet interdit, on peut avoir recours, au niveau de chaque carte de calculateur, à l'exécution d'un deuxième programme applicatif de monitoring qui échange régulièrement des données avec le programme applicatif dont l'exécution est surveillée et, soit analyse la validité des données retournées, soit les transmet pour analyse à une autre carte de calculateur exécutant un programme de validation. Un tel recours a l'inconvénient de mobiliser de la puissance de calcul d'une carte de calculateur au détriment du nombre des exécutions des programmes applicatifs.

On propose ici de réaliser une surveillance d'un réseau de calculateurs garantissant la portabilité des programmes applicatifs exécutés, tel qu'un réseau de calculateurs IMA, sans faire appel à des programmes de monitoring consommant du temps de calcul d'une carte de calculateur exécutant des programmes applicatifs.

Le principe est le suivant : A chaque coeur numérique d'une carte de calculateur est associé individuellement un automate de surveillance câblé, à fonctionnement indépendant, de type chien de garde (watchdog en anglo-saxon). Cet automate de surveillance peut être localisé dans la carte de calculateur. Il est le plus indépendant possible du coeur numérique de la carte de calculateur qui supporte les programmes applicatifs afin d'avoir le minimum de possibilité de panne commune, ce minimum se réduisant par exemple aux seules pannes d'alimentation.

Durant la phase d'initialisation et avant le démarrage de l'ordonnancement temporel des programmes applicatifs, le système d'exploitation réseau d'une carte de calculateur transmet, à l'automate de surveillance associé individuellement au coeur numérique de la carte de calculateur concernée, les données suivantes :
- le cadencement des sous-fenêtres temporelles MIF ou horloge temps réel (instants de changement de sous-fenêtre temporelle MIF),
- le cadencement des fenêtres temporelles MAF qui est un sous-multiple en fréquence de l'horloge temps réel (instants de changement de fenêtre temporelle MAF),
- pour chacun des découpages temporels correspondant à une allocation de partitions mémoire, l'identité de la partition, le point de démarrage temporel de l'allocation de partitions mémoire par rapport au début de sa fenêtre temporelle MAF d'occurrence, le point de fin temporel de l'allocation de partitions mémoire par rapport au début de sa fenêtre temporelle MAF d'occurrence, et la position relative de sa sous-fenêtre d'occurrence MIF par rapport aux autres sous-fenêtres temporelles MIF appartenant à la même fenêtre temporelle MAF.

Ces données permettent à un automate de surveillance d'avoir, dès la fin de la séquence d'initialisation, une connaissance complète de la séquence d'allocation des ressources de sa carte de calculateur, qu'il copie dans une mémoire indépendante gérée par lui seul.

Dès le démarrage du gestionnaire de tâches des systèmes d'exploitation réseau et calculateur, le coeur numérique du calculateur d'une carte ou module signale à son automate de surveillance, au moyen d'un code spécial, chaque début de fenêtre temporelle MAF consacrée à l'exécution d'un programme applicatif. En outre, il lui transmet, à chaque changement d'allocation de partitions mémoire, les données relatives à la dernière allocation de partitions mémoire exécutée, à savoir : son identité, ses heures effectives de début et de fin, et le numéro d'ordre, au sein d'une fenêtre temporelle MAF de la sous-fenêtre temporelle MIF d'occurrence de l'allocation de la partition mémoire quittée.

L'automate de surveillance utilise ces données et la séquence d'allocation des ressources stockée dans sa mémoire privative pour contrôler, par rapport à une horloge locale qui lui est propre et indépendante de celle du système d'exploitation calculateur, l'exécution de la séquence d'allocation temporelle par le système d'exploitation calculateur de sa carte de calculateur ou module. Outre le contrôle de la bonne exécution de la séquence d'allocation, l'automate de surveillance vérifie la cohérence de date dynamique en comparant chaque date de fin de sous-fenêtre MIF déclarée par le système d'exploitation calculateur avec la date de réception lue sur son horloge locale (ceci avec une tolérance autorisée et préprogrammée). Si un rendez-vous est manqué ou erroné, L'exécution du programme applicatif associé à la fenêtre temporelle MAF en cours est considérée comme défaillante et une sanction est prise par l'automate de surveillance. La sanction prise dépend de la criticité de la carte de calculateur ou module concerné. Elle peut être :
- une remise à zéro instantanée (reset) de la carte de calculateur,
- une émission d'une interruption non masquable (Non maskable interrupt) aboutissant à une remise à zéro de la carte de calculateur au bout d'un certain délai, ce qui permet au système d'exploitation du calculateur d'enregistrer, lorsqu'il en est capable, le contexte de l'erreur avant de subir une remise à zéro.
- une signalisation de la carte de calculateur à problème aux autres cartes de calculateur du réseau au moyen d'un sémaphore de dysfonctionnement prenant une valeur booléenne attribuée à un défaut.

Comme les horloges du système d'exploitation calculateur et de l'automate de surveillance d'une carte de calculateur sont indépendantes, une dérive peut apparaître entre les deux avec le temps et justifier une resynchronisation. Pour cette resynchronisation, l'automate de surveillance se base sur l'occurrence d'un message de changement de fenêtre temporelle MAF envoyé par le système d'exploitation calculateur de la carte. Il vérifie que ce message arrive dans une fenêtre temporelle de largeur prédéterminée, par exemple, +/- 10% de celle d'une fenêtre temporelle MAF, centrée sur sa position attendue par rapport à sa propre horloge. Si c'est le cas, l'automate resynchronise son horloge sur le message de changement de fenêtre temporelle MAF reçu du système d'exploitation calculateur de sa carte. Si ce n'est pas le cas, une sanction est prise par l'automate de surveillance en fonction de la criticité de sa carte de calculateur (remise à zéro de la carte, émission d'une interruption non-masquable entraînant une remise à zéro au bout d'un certain délai, signalisation de défaut, etc..).

On peut parfaire cette surveillance de la bonne exécution de programmes applicatifs par les cartes de calculateur ou modules d'un réseau IMA en ajoutant à la deuxième interface logiciel APICOS 210 une ou des applications de service spécialisées dans la surveillance du bon fonctionnement, auxquelles les programmes applicatifs peuvent s'abonner et dont l'exécution est confiée à l'automate de surveillance du coeur numérique de chaque carte de calculateur. Une application de service de surveillance peut être une application de type rendez-vous manqué (time-out en anglo-saxon), tout programme applicatif abonné devant périodiquement produire un événement particulier dont l'avènement en temps opportun est constaté par l'automate de surveillance ou une application de type chien de garde, tout programme applicatif devant répondre de la manière convenue à des questions posées périodiquement par l'automate de surveillance.

Les paramètres de configuration des modes d'action et des sanctions infligées par ces applications de service de surveillance de l'interface logiciel APICOS sont mis dans une table de configuration de la carte de calculateur comportant l'automate de surveillance susceptible de les exécuter.

Un programme applicatif s'abonne à une application de service de surveillance en présentant, au cours de la phase d'initialisation du réseau, une demande d'abonnement sur un port de communication du ou des automates de surveillance de la ou des cartes de calculateur chargées de son exécution. Une fois la demande faite, elle n'est plus révocable. Le ou les automates de surveillance exécutent en arrière plan l'application de service de surveillance concernée et appliquent, en cas de faute détectée, la sanction prévue dans les paramètres de configuration. La sanction prise par un automate de surveillance en exécution d'une application de service de surveillance dépend de la criticité du programme applicatif surveillé vis à vis du fonctionnement de la carte de calculateur associée à l'automate de surveillance

Lorsque le programme applicatif surveillé est considéré comme critique vis à vis du fonctionnement du module, la sanction prise par un automate de surveillance à la suite d'une absence de réponse convenable à une application de service de surveillance peut être comme précédemment :
- une remise à zéro instantanée (reset) de la carte de calculateur associée à l'automate de surveillance,
- une émission d'une interruption non masquable (Non maskable interrupt) aboutissant à une remise à zéro de la carte de calculateur associée à l'automate de surveillance au bout d'un certain délai, ce qui permet au système d'exploitation du calculateur d'enregistrer, lorsqu'il en est capable, le contexte de l'erreur avant de subir une remise à zéro.
- une signalisation de la carte de calculateur à problème aux autres cartes de calculateur du réseau au moyen d'un sémaphore de dysfonctionnement identifiant non seulement la carte de calculateur en défaut mais également le programme applicatif dont l'exploitation est à l'origine du dysfonctionnement.

Lorsque le programme applicatif surveillé doit subir une sanction mais que son défaut d'exécution n'affecte pas le reste du fonctionnement de la carte de calculateur associée à l'automate de surveillance, la sanction peut être traitée par les systèmes d'exploitation réseau et calculateur de cette carte. Elle peut consister en une réinitialisation ou un arrêt définitif de l'exécution du programme applicatif concerné avec retrait simultané de son abonnement aux applications de service de surveillance. Cet abonnement sera repris par le programme applicatif lui-même quand son exécution redémarrera.

Le retrait d'un abonnement d'un programme applicatif à une application de service de surveillance de bonne exécution peut également subvenir à l'initiative des systèmes d'exploitation réseau et calculateur d'une carte de calculateur lorsque ceux-ci provoquent la réinitialisation d'un programme applicatif après avoir détecté par eux-mêmes une faute d'exécution ou avoir reçus un ordre d'arrêt de l'exécution d'un programme applicatif.

La figure 4 donne un exemple de carte de calculateur ou module d'un réseau IMA équipée d'un automate individuel câblé de surveillance du bon fonctionnement. On y distingue la partie habituelle de calculateur 40 avec un processeur 400 associé à une horloge 401, des mémoires de travail RAM et de programmation ROM 402, des ports d'entrée-sortie PIO 403 donnant accès à la partie calculateur de la carte aux bus 41 de communication du réseau de calculateurs, et une interface analogique 404 permettant à la partie calculateur de la carte de traiter des informations analogiques provenant de capteurs et de donner des consignes analogiques à des actionneurs raccordés au réseau de calculateurs par des liaisons du bus de communication 41. Bien entendu, la partie calculateur d'une carte peut comporter plusieurs processeurs de nature différentes dialoguant entre eux ou encore des circuits logiques spécialisés tels que des minuteries.

La partie calculateur proprement dite 40 d'une carte de calculateur ou module de réseau IMA est complétée par un automate individuel câblé 50 de surveillance de son bon fonctionnement. Cet automate 50, est comme la partie calculateur 40, à base d'un processeur 500 associé à une horloge 501, à des mémoires de travail RAM et de programmation ROM 502 et à des ports d'entrée-sortie PIO 503 mais il a une capacité de calcul beaucoup plus réduite et se limite à la surveillance des signaux logiques apparaissant sur les ports d'entrée-sortie PIO 403 de la partie calculateur. Toutefois le processeur 500 peut être remplacé par un automate de type câblé réalisé dans un ASIC ou un composant programmable. Il est relié au bus de communication du réseau pour la signalisation d'un défaut d'exécution d'un programme applicatif par la partie calculateur de la carte. Pour assurer la surveillance du bon fonctionnement, il scrute les ports d'entrée-sortie PIO 403 de la partie calculateur de la carte où il est monté, soit directement, soit par l'intermédiaire du bus de communication 41 du réseau de calculateur IMA.

Lorsque le réseau de calculateurs IMA comporte un dispositif de maintenance, les alarmes de dysfonctionnement des automates de surveillance des différentes cartes de calculateur lui sont communiquées pour la confection d'un compte-rendu de panne.

## Revendications

1. Procédé de contrôle du bon fonctionnement d'un calculateur comportant un coeur numérique (40) exécutant en temps partagé plusieurs programmes applicatifs distincts et indépendants partitionnés en tâches, sous le contrôle d'un système d'exploitation (21, 22) allouant des partitions mémoire, des fenêtres temporelles (MAF) d'exécution de programme applicatif et des sous-fenêtres temporelles (MIF) d'exécution de tâches organisées en trames **caractérisé en ce qu'**il consiste à :
- associer au calculateur (40) un automate (50) câblé de surveillance à fonctionnement indépendant du coeur numérique du calculateur,
- lors de l'initialisation du système d'exploitation (21, 22) du calculateur (40), faire transmettre par le coeur numérique du calculateur (40) à l'automate de surveillance (50), une définition des trames des fenêtres et sous-fenêtres temporelles (MAF, MIF) et des allocations de partitions mémoire, au moyen d'une programmation adaptée dudit calculateur,
- faire signaler par le coeur numérique du calculateur (40) à l'automate de surveillance (50) chaque changement de fenêtre temporelle (MAF), au moyen d'une programmation adaptée dudit calculateur,
- faire communiquer par le coeur numérique du calculateur (40) à l'automate de surveillance (50), à chaque changement d'allocation de partitions mémoire, l'identité de la partition mémoire quittée, les heures de début et de fin d'allocation de la partition mémoire quittée et le numéro d'ordre, au sein d'une fenêtre temporelle (MAF), de la sous-fenêtre temporelle (MIF) d'occurrence de l'allocation de la partition mémoire quittée, au moyen d'une programmation adaptée dudit calculateur,
- à partir des signalements de changement d'allocation de partitions mémoire délivrés par le coeur numérique du calculateur (40), faire surveiller par l'automate de surveillance (50), le respect par le calculateur (40) des trames des fenêtres temporelles (MAF) d'exécution de programmes applicatifs et des sous-fenêtres temporelles (MIF) d'exécution de tâches, et des allocations de partitions mémoire qu'il a fourni à l'initialisation de son système d'exploitation, au moyen d'une programmation adaptée dudit automate de surveillance, et
- faire émettre par l'automate de surveillance (50), une alarme de dysfonctionnement à chaque incohérence détectée entre les signalements du coeur numérique du calculateur (40) et les définitions de la trame des fenêtres et sous-fenêtres temporelles (MAF, MIF) d'exécution de programmes applicatifs et de tâches, et des allocations de partitions mémoire reçues à l'initialisation, du système d'exploitation du calculateur (40), au moyen d'une programmation adaptée dudit automate de surveillance.

2. Procédé selon la revendication 1, **caractérisé en ce que** le coeur numérique du calculateur (40) et l'automate de surveillance (50) qui lui est associé sont pourvus d'horloges indépendantes (401, 501).

3. Procédé selon la revendication 2, **caractérisé en ce que**, à chaque changement de fenêtre temporelle (MAF) d'exécution de programme applicatif, l'automate de surveillance (50) teste la dérive de son horloge par rapport à celle du coeur numérique du calculateur (40), resynchronise son horloge sur celle du calculateur (40) si la dérive reste dans une fenêtre de tolérance arbitraire et émet une alarme de dysfonctionnement dans le cas contraire.

4. Procédé selon la revendication 3, **caractérisé en ce que** la fenêtre de tolérance arbitraire a une largeur de l'ordre du dixième de la durée d'une fenêtre temporelle (MAF).

5. Procédé selon la revendication 1, **caractérisé en ce qu'**il consiste en outre à établir, pour les programmes applicatifs exécutés par le calculateur (40), un système d'abonnement facultatif à des applications programmables de service de surveillance exécutées par l'automate de surveillance (50).

6. Procédé selon la revendication 5, **caractérisé en ce que** les applications programmables de service de surveillance exécutées par l'automate de surveillance (50) sont paramétrées lors de l'initialisation du système d'exploitation du calculateur associé (40).

7. Procédé selon la revendication 5, **caractérisé en ce que** les applications programmables de service de surveillance exécutées par l'automate de surveillance (50) opèrent leur surveillance au niveau de ports d'entrée-sortie du calculateur (40).

8. Procédé selon la revendication 5, **caractérisé en ce que** les applications programmables de service de surveillance exécutées par l'automate de surveillance (50) sont de type rendez-vous manqué.

9. Procédé selon la revendication 5, **caractérisé en ce que** les applications programmables de service de surveillance exécutées par l'automate de surveillance (50) sont de type chien de garde.

10. Procédé selon la revendication 1, **caractérisé en ce que** les alarmes de dysfonctionnement émises sont utilisées pour réinitialiser le programme applicatif à l'origine de l'alarme.

11. Procédé selon la revendication 1, **caractérisé en ce que** les alarmes de dysfonctionnement émises sont utilisées pour réinitialiser le système d'exploitation du calculateur (40).

12. Procédé selon la revendication 11, **caractérisé en ce que**, dans le cas d'un coeur numérique de calculateur (40) pourvu d'un système d'interruptions non masquables, les alarmes de dysfonctionnement émises par l'automate de surveillance (50) qui lui est associé, sont utilisées pour le réinitialiser, au bout d'un certain délai, par l'intermédiaire d'une interruption non masquable, le délai étant mis à profit pour enregistrer le contexte du dysfonctionnement.

13. Procédé selon la revendication 1, **caractérisé en ce qu'**il consiste en outre, lorsque le calculateur (40) est relié à un équipement de maintenance, à exploiter les alarmes de dysfonctionnement émises par l'automate de surveillance (50) qui lui est associé, pour envoyer un compte-rendu de panne à l'équipement de maintenance.

14. Procédé selon la revendication 1, **caractérisé en ce qu'**il consiste en outre, lorsque le calculateur fait partie d'un réseau de calculateurs (5, 6, 7) équipés d'automates individuels de surveillance, à exploiter les alarmes de dysfonctionnement émises par les automates individuels de surveillance (50) des différents calculateurs (5, 6, 7) pour envoyer aux autres calculateurs des sémaphores de dysfonctionnement mentionnant le ou les calculateurs concernés.

15. Procédé selon la revendication 14 **caractérisé en ce qu'**un sémaphore de dysfonctionnement mentionne, en plus du calculateur concerné, le programme applicatif impliqué dans le dysfonctionnement.

16. Procédé selon la revendication 1, **caractérisé en ce qu'**il consiste en outre, lorsque les programmes applicatifs sont exécutés en parallèle, de manière redondante, sur plusieurs calculateurs (5, 6, 7) qui sont équipés individuellement d'automates de surveillance (50) et dont un a pris la main, les autres fonctionnant en miroir en arrière plan, à exploiter les alarmes de dysfonctionnement émises par les automates individuels de surveillance (50) des différents calculateurs (5, 6, 7) pour mettre en retrait, pour le programme applicatif concerné par une alarme, le calculateur à l'origine de cette alarme et pour le remplacer, s'il est en charge de ce programme applicatif, par un calculateur fonctionnant auparavant en miroir en arrière plan, qui prend alors la main pour le programme applicatif considéré.

## Patentansprüche

1. Verfahren zum Steuern des ordnungsgemäßen Betriebs eines Computers mit einem digitalen Kern (40), der in einem Timesharing-Modus mehrere getrennte und unabhängige, nach Aufgaben partitionierte Programmanwendungen unter der Steuerung eines Betriebssystems (21, 22) ausführt, das Speicherpartitionen, Zeitfenster (MAF) zum Ausführen von Anwendungsprogrammen und Zeitsubfenster (MIF) zum Ausführen von in Rahmen organisierten Aufgaben zuordnet, **dadurch gekennzeichnet, dass** es Folgendes beinhaltet:
- Assoziieren eines fest verdrahteten Überwachungsautomaten (50) mit dem Computer (40), der unabhängig vom digitalen Kern des Computers arbeitet;
- Senden beim Initialisieren des Betriebssystems (21, 22) des Computers (40), durch den digitalen Kern des Computers (40), einer Definition von Rahmen von Zeitfenstern und -subfenstern (MAF, MIF) und von Zuordnungen von Speicherpartitionen mittels an den Computer angepasster Programmierung zum Überwachungsautomat (50);
- Signalisieren, durch den digitalen Kern des Computers (40), jeder Änderung des Zeitfensters (MAF) des Überwachungsautomats (50) mittels an den Computer angepasster Programmierung;
- Übermitteln, durch den digitalen Kern des Computers (40), bei jeder Zuordnungsänderung von Speicherpartitionen, der Identität der verlassenen Speicherpartition, der Anfangs- und Endzeit der Zuweisung der verlassenen Speicherpartition und der Sequenznummer, im Innern eines Zeitfensters (MAF), des Zeitsubfensters (MIF), in dem die Zuordnung der verlassenen Speicherpartition aufgetreten ist, an den Überwachungsautomat (50) mittels an den Computer angepasster Programmierung;
- Überwachen, durch den Überwachungsautomat (50), auf der Basis von vom digitalen Kern des Computers (40) gelieferten Signalisierungen einer Änderung der Zuweisung von Speicherpartitionen, der Einhaltung, durch den Computer (40), der Rahmen der Zeitfenster (MAF) zur Ausführung von Anwendungsprogrammen und der Zeitsubfenster (MIF) zur Ausführung von Aufgaben, und der von ihm bei der Initialisierung seines Betriebssystems gelieferten Zuordnungen von Speicherpartitionen mittels an den Überwachungsautomat angepasster Programmierung; und
- Aussenden, durch den Überwachungsautomat (50), eines Fehlfunktionsalarms bei jeder Inkonsistenz, die zwischen den Signalisierungen des digitalen Kerns des Computers (40) und den Definitionen des Rahmens der Zeitfenster und -subfenster (MAF, MIF) zur Ausführung von Anwendungsprogrammen und Aufgaben erkannt wurde, und der Zuordnungen von bei der Initialisierung des Betriebssystems des Computers (40) empfangenen Speicherpartitionen, mittels an den Überwachungsautomat angepasster Programmierung.

2. Verfahren nach Anspruch 1, **dadurch gekennzeichnet, dass** der digitale Kern des Computers (40) und der damit assoziierte Überwachungsautomat (50) mit unabhängigen Taktgebern (401, 501) versehen sind.

3. Verfahren nach Anspruch 2, **dadurch gekennzeichnet, dass** bei jeder Änderung des Zeitfensters (MAF) zur Ausführung eines Anwendungsprogramms der Überwachungsautomat (50) die Abweichung seines Taktgebers von dem des digitalen Kerns des Computers (40) prüft, seinen Taktgeber mit dem des Computers (40) resynchronisiert, wenn die Abweichung innerhalb eines willkürlichen Toleranzfensters bleibt, und ansonsten einen Fehlfunktionsalarm aussendet.

4. Verfahren nach Anspruch 3, **dadurch gekennzeichnet, dass** die Größe des willkürlichen Toleranzfensters etwa ein Zehntel der Dauer eines Zeitfensters (MAF) beträgt.

5. Verfahren nach Anspruch 1, **dadurch gekennzeichnet, dass** es ferner darin besteht, für die vom assoziierten Computers (40) ausgeführten Anwendungsprogramme ein optionales Abonnementsystem für vom Überwachungsautomat (50) ausgeführte programmierbare Überwachungsdiensteanwendungen einzurichten.

6. Verfahren nach Anspruch 5, **dadurch gekennzeichnet, dass** die vom Überwachungsautomat (50) ausgeführten programmierbaren Überwachungsdiensteanwendungen bei der Initialisierung des Betriebssystems des assoziierten Computers (40) parametrisiert werden.

7. Verfahren nach Anspruch 5, **dadurch gekennzeichnet, dass** die vom Überwachungsautomat (50) ausgeführten Überwachungsdiensteanwendungen ihre Überwachung auf die E/A-Ports des Computers (40) anwenden.

8. Verfahren nach Anspruch 5, **dadurch gekennzeichnet, dass** die vom Überwachungsautomat (50) ausgeführten programmierbaren Überwachungsdiensteanwendungen vom Timeout-Typ sind.

9. Verfahren nach Anspruch 5, **dadurch gekennzeichnet, dass** die vom Überwachungsautomat (50) ausgeführten programmierbaren Überwachungsdiensteanwendungen vom Watchdog-Typ sind.

10. Verfahren nach Anspruch 1, **dadurch gekennzeichnet, dass** die ausgesendeten Fehlfunktionsalarme zum Neuinitialisieren des Anwendungsprogramms am Ursprung des Alarms benutzt werden.

11. Verfahren nach Anspruch 1, **dadurch gekennzeichnet, dass** die ausgesendeten Fehlfunktionsalarme zum Neuinitialisieren des Betriebssystems des Computers (40) verwendet werden.

12. Verfahren nach Anspruch 11, **dadurch gekennzeichnet, dass** im Falle eines mit einem nicht-maskierbaren Unterbrechungssystem ausgestatteten digitalen Kerns eines Computers (40) die von dem damit assoziierten Überwachungsautomat (50) ausgesendeten Fehlfunktionsalarme für dessen Neuinitialisierung nach einer bestimmten Zeitperiode mittels einer nicht maskierbaren Unterbrechung benutzt werden, wobei die Verzögerung zum Speichern des Kontexts der Fehlfunktion genutzt wird.

13. Verfahren nach Anspruch 1, **dadurch gekennzeichnet, dass** es ferner darin besteht, wenn der Computer (40) mit einem Wartungsgerät verbunden ist, die von dem damit assoziierten Überwachungsautomat (50) ausgesendeten Fehlfunktionsalarme zum Senden eines Störberichts zu dem Wartungsgerät zu nutzen.

14. Verfahren nach Anspruch 1, **dadurch gekennzeichnet, dass** es ferner darin besteht, wenn der Computer Teil eines mit individuellen Überwachungsautomaten ausgestatteten Computernetzwerks (5, 6, 7) ist, die von den individuellen Überwachungsautomaten (50) der verschiedenen Computer (5, 6, 7) ausgesendeten Fehlfunktionsalarme zum Senden von die ein oder mehreren betroffenen Computer angebenden Fehlfunktionssemaphoren zu den anderen Computern zu nutzen.

15. Verfahren nach Anspruch 14, **dadurch gekennzeichnet, dass** ein angegebenes Fehlfunktionssemaphor zusätzlich zu dem betroffenen Computer das an der Fehlfunktion beteiligte Anwendungsprogramm angibt.

16. Verfahren nach Anspruch 1, **dadurch gekennzeichnet, dass** es ferner darin besteht, wenn die Anwendungsprogramme parallel auf redundante Weise auf mehreren Computern (5, 6, 7) ausgeführt werden, die individuell mit Überwachungsautomaten (50) ausgestattet sind und übernommen wurden, wobei die anderen im Hintergrund im Spiegelmodus arbeiten, die von den individuellen Überwachungsautomaten (50) der verschiedenen Computer (5, 6, 7) ausgesendeten Fehlfunktionsalarme zu nutzen, um für das von einem Alarm betroffene Anwendungsprogramm den Computer herauszunehmen, der der Ursprung dieses Alarms ist, und ihn, wenn er für dieses Anwendungsprogramm verantwortlich ist, durch einen Computer zu ersetzen, der zuvor im Hintergrund im Spiegelmodus arbeitete, der dann das betrachtete Anwendungsprogramm übernimmt.

## Claims

1. A method for controlling the correct operation of a computer comprising a digital core (40) executing in time-sharing mode a plurality of distinct and independent program applications that are partitioned into tasks, under the control of an operating system (21, 22) allocating memory partitions, time windows (MAF) for executing application programs and time sub-windows (MIF) for executing tasks organised into frames, **characterised in that** it comprises:
- associating a hardwired monitoring automaton (50) with said computer (40) that operates independently of said digital core of said computer;
- transmitting to said monitoring automaton (50), by said digital core of said computer (40) and during the initialisation of said operating system (21, 22) of said computer (40), a definition of the time window and sub-window frames (MAF, MIF) and of the allocations of memory partitions, by means of programming adapted to said computer;
- alerting, by said digital core of said computer (40), said monitoring automaton (50) of each change of time window (MAF), by means of programming adapted to said computer;
- communicating to said monitoring automaton (50), by said digital core of said computer (40) and upon each change of allocation of memory partitions, the identity of the exited memory partition, the allocation start and end times of the exited memory partition and the sequence number, within a time window (MAF), of the time sub-window (MIF) in which the allocation of the exited memory partition occurred, by means of programming adapted to said computer;
- monitoring, by said monitoring automaton (50) and on the basis of alerts of changes of allocation of memory partitions delivered by said digital core of said computer (40), the compliance by said computer (40) of the frames of the time windows (MAF) for executing application programs and the time sub-windows (MIF) for executing tasks, and the allocations of memory partitions that it has supplied upon the initialisation of its operating system, by means of programming adapted to said monitoring automaton; and
- emitting, by said monitoring automaton (50), a malfunction alarm for each inconsistency detected between the alerts of said digital core of said computer (40) and the definitions of the frame of the time windows and sub-windows (MAF, MIF) for executing application programs and tasks, and the allocations of memory partitions received upon initialisation of the operating system of said computer (40), by means of programming adapted to said monitoring automaton.

2. The method according to claim 1, **characterised in that** said digital core of said computer (40) and said monitoring automaton (50) associated therewith are provided with independent clocks (401, 501).

3. The method according to claim 2, **characterised in that**, upon each change of time window (MAF) for executing an application program, said monitoring automaton (50) tests the drift of its clock compared to that of said digital core of said computer (40), re-synchronises its clock against said computer (40) if the drift remains within an arbitrary tolerance window and otherwise emits a malfunction alarm.

4. The method according to claim 3, **characterised in that** the size of said arbitrary tolerance window is approximately one tenth of the duration of a time window (MAF).

5. The method according to claim 1, **characterised in that** it further comprises establishing, for the application programs executed by said computer (40), a system for optionally subscribing to programmable monitoring service applications executed by said monitoring automaton (50).

6. The method according to claim 5, **characterised in that** said programmable monitoring service applications executed by said monitoring automaton (50) are set during the initialisation of the operating system of the associated computer (40).

7. The method according to claim 5, **characterised in that** said programmable monitoring service applications executed by said monitoring automaton (50) apply their monitoring to the I/O ports of said computer (40).

8. The method according to claim 5, **characterised in that** said programmable monitoring service applications executed by said monitoring automaton (50) are of the time-out type.

9. The method according to claim 5, **characterised in that** said programmable monitoring service applications executed by said monitoring automaton (50) are of the watchdog type.

10. The method according to claim 1, **characterised in that** the emitted malfunction alarms are used to re-initialise the application program that is the source of the alarm.

11. The method according to claim 1, **characterised in that** the emitted malfunction alarms are used to re-initialise the operating system of said computer (40).

12. The method according to claim 11, **characterised in that**, in the case of a digital core of a computer (40) provided with a non-maskable interrupt system, the malfunction alarms emitted by said monitoring automaton (50) associated therewith are used for its re-initialisation, at the end of a certain time period, by means of a non-maskable interrupt, the delay being used to save the context of the malfunction.

13. The method according to claim 1, **characterised in that** it further comprises, when said computer (40) is connected to an item of maintenance equipment, using the malfunction alarms emitted by said monitoring automaton (50) associated therewith to send a failure report to said maintenance equipment.

14. The method according to claim 1, **characterised in that** it further comprises, when said computer belongs to a computer network (5, 6, 7) equipped with individual monitoring automatons, using the malfunction alarms emitted by said individual monitoring automatons (50) of said various computers (5, 6, 7) to send malfunction semaphores to the other computers that indicate the one or more affected computers.

15. The method according to claim 14, **characterised in that** a malfunction semaphore indicates, in addition to the affected computer, the application program involved in the malfunction.

16. The method according to claim 1, **characterised in that** it further comprises, when the application programs are executed in parallel in a redundant manner on a plurality of computers (5, 6, 7), which are individually equipped with monitoring automatons (50) and one of which has been taken over, the others operating in the background in mirror mode, using the malfunction alarms emitted by said individual monitoring automatons (50) of said various computers (5, 6, 7) to withdraw, for the application program affected by an alarm, the computer that is the source of this alarm and replace it, if it is responsible for this application program, with a computer previously operating in the background in mirror mode, which then takes over the considered application program.
